# EUROPÄISCHE PATENTSCHRIFT

(11) **EP 2 758 284 B1**
(45) Veröffentlichungstag und Bekanntmachung des Hinweises auf die Patenterteilung: **04.11.2015**
(21) Anmeldenummer: 12756488.8
(22) Anmeldetag: 11.09.2012
(51) Int. Cl.: B60R 21/233, B60R 21/206, B60R 21/261

(54) **KNIEAIRBAG MIT EINEM FORMGEBENDEN INNEREN FÜLLSCHLAUCH**
KNEE AIRBAG HAVING A SHAPING INNER INFLATION TUBE
AIRBAG GENOUX MUNI D'UN TUYAU DE REMPLISSAGE LUI CONFÉRANT SA FORME

(30) Priorität: 22.09.2011 DE 102011053863
(43) Veröffentlichungstag der Anmeldung: 30.07.2014
(73) Patentinhaber: Autoliv Development AB, 447 83 Vårgårda (SE)
(72) Erfinder: ADOLPH, Oliver, 85241 Hebertshausen (DE); NEBEL, Raimund, 86836 Obermeitingen (DE)
(74) Vertreter: Müller, Karl-Ernst
(86) Internationale Anmeldenummer: PCT/EP2012/067711
(87) Internationale Veröffentlichungsnummer: WO 2013/041406

(56) Entgegenhaltungen:
- EP-A2- 1 632 406
- DE-A1-102005 047 693
- DE-A1-102008 060 858
- JP-A- 2003 226 218
- JP-A- 2005 096 625
- JP-A- 2006 298 123
- JP-A- 2009 208 772
- JP-A- 2011 057 087

## Beschreibung

Die Erfindung betrifft einen Knieairbag für ein Kraftfahrzeug, bestehend aus einem an einen Gasgenerator angeschlossenen und sich in aufgeblasenem Zustand entlang einer Längsrichtung von einem an ein fahrzeugfestes Teil anbindbaren hinteren Ende zu einem freien, einem Fahrzeuginsassen zuwendbaren Ende erstreckenden Gassack, wobei der aufgeblasene Gassack durch in seinem Inneren quer zur Längsrichtung verlaufende Trennwände in mehrere Kammern unterteilt ist und in aufgeblasenem Zustand eine bananenförmig gekrümmte Gestalt einnimmt, deren dem Fahrzeuginsassen zuwendbare äußere Fläche mit einem größeren Radius gekrümmt ist als deren gegenüberliegende, dem Fahrzeugteil zuwendbare Fläche.

Ein Knieairbag mit den vorgenannten Merkmalen ist in der DE 10 2008 060858 A1 beschrieben. Bei einem derartigen Knieairbag ist gewünscht, dass der Gassack in seinem aufgeblasenen Zustand eine bananenförmige Gestalt annimmt, damit sich der in der Regel im unteren Bereich des Armaturenbretts eines Kraftfahrzeuges beziehungsweise unterhalb davon angeordnete Gassack des Knieairbags vor die Unterschenkel beziehungsweise Knie des davor sitzenden Fahrzeuginsassen und nach oben hin zwischen den Knien und dem Armaturenbrett entfaltet. Das Aufblasen des bekannten Gassacks geschieht durch Einleiten von Gas in die dem fahrzeugseitig untergebrachten Gasgenerator benachbarte erste Kammer des Gassacks, von wo aus sich das Gas über in den die einzelnen Kammern voneinander trennenden Trennwänden ausgebildete Überströmöffnungen in die einzelnen Kammern verteilt und diese nacheinander entfaltet und aufbläst.

Mit dem bekannten Knieairbag ist zunächst der Nachteil verbunden, dass die Bananenform des aufgeblasenen Gassacks eine komplizierte Ausgestaltung der Zuschnitte für den Gassack und deren Verbindung miteinander bedingt, so dass die Herstellung des Gassacks entsprechend aufwendig ist. Ein weiterer Nachteil besteht darin, dass sich der Gassack vergleichsweise langsam aufbläst, weil das Gas von Kammer zu Kammer über die in den dazwischenliegenden Trennwänden ausgebildeten und einen begrenzten Querschnitt aufweisenden Überströmöffnungen strömen muss. Soweit der aufzublasende Gassack vor seiner Funktion zusammengefaltet hinter einer fahrzeugseitigen und in der Regel an einer Sollbruchlinie zu öffnenden Abdeckung untergebracht ist, ist schließlich das Aufblasverhalten des bekannten Gassackes auch deswegen ungünstig, weil ein Knieairbag in der Regel eine gewisse, beide Beine beziehungsweise Knie eines Fahrzeuginsassen abdeckende Breite aufweist. Soweit die Abdeckung somit ebenfalls eine der Breite des Gassacks entsprechend lange Sollbruchlinie aufweist, kann es zu Beginn des Aufblasvorganges je nach der Einfaltung des Gassackes zu einer nicht ausreichend genau definierten Beaufschlagung der Abdeckung mit einem ungeregelten Aufreißen der Sollbruchlinie kommen.

Aus DE 10 2005 047 693 A1 ist ein faltbarer Füllschlauch zur gleichmäßigen Befüllung eines Kopfschutzairbags bekannt. Der Füllschlauch verläuft senkrecht zur Entfaltungsrichtung des Airbags und durchstößt die Trennwände nicht, welche seitlich zum Verlauf des Füllschlauches gebildet sind.

Ferner ist es aus JP 2005 069 625 A bekannt, dass die Trennwände eines Knieairbags durchstoßen werden, um eine spezifische Gas- und Druckverteilung in dem Airbag zu erreichen. Es wird jedoch bewusst kein Gas in eine innere Kammer geführt.

Der Erfindung liegt daher die Aufgabe zu Grunde, einen Knieairbag mit den gattungsgemäßen, eingangs genannten Merkmale so auszugestalten, dass die vorgenannten Nachteile vermieden sind.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass im Inneren des Gassacks wenigstens ein an den Gasgenerator angeschlossener, sich in der Längsrichtung des Gassackes erstreckender und dabei die Trennwände durchstoßender Füllschlauch mit einer in aufgeblasenem Zustand bananenförmigen Gestalt angeordnet ist, in dessen Wandung im Bereich jeder einzelnen von ihm erfassten Kammer des Gassackes wenigstens eine Ausströmöffnung angeordnet ist.

Mit der Erfindung ist der Vorteil verbunden, dass auf Grund der Anordnung des bananenförmigen Füllschlauches im Inneren des Gassacks der aufgeblasene Füllschlauch die gewünschte bananenförmige Gestalt des Gassackes bestimmt, so dass die Auslegung der Zuschnitte des Gassackes und dessen Fertigung einfacher gehalten werden können. Hierbei ist ein bananenförmiger Füllschlauch wesentlich einfacher herzustellen als eine entsprechende Form eines gesamten, mehrere Kammern aufweisenden Gassackes. Da das Gas beim Aufblasen des Gassackes über den alle Kammern erfassenden Füllschlauch und dessen Ausströmöffnungen praktisch gleichzeitig in die einzelnen Kammern des Gassackes eingeleitet wird, vollzieht sich das Aufblasen des Gassackes wesentlich schneller, so dass der Knieairbag seine Schutzfunktion im Vergleich mit dem bekannten Knieairbag wesentlich früher erfüllen kann. Schließlich übt der sich zu Beginn des Aufblasvorganges zuerst aufblasende Füllschlauch an definierter Stelle einen Druck auf die Abdeckung aus, so dass das Aufsprengen der Abdeckung längs der vorgesehenen Sollbruchlinie gerichtet erfolgt und somit verbessert ist.

Die erfindungsgemäße Anordnung des Füllschlauches gibt auch die Möglichkeit, die einzelnen Kammern des Gassackes unterschiedlich aufzublasen, insbesondere beispielsweise die dem Gasgenerator benachbarte unterste Kammer weniger aufzublasen als die höheren, näher beim Fahrzeuginsassen liegenden Kammern des Gassackes, was bei Einsatz eines aus dem Stand der Technik bekannten Knieairbags ausgeschlossen ist. Hierzu kann vorgesehen sein, dass die den einzelnen Kammern des Gassackes zugeordneten Ausströmöffnungen des Füllschlauches jeweils unterschiedliche Querschnitte aufweisen. Alternativ kann vorgesehen sein, daß in dem den einzelnen Kammern des Gassackes zugeordneten Abschnitten des Füllschlauches jeweils eine unterschiedliche Anzahl von Ausströmöffnungen angeordnet ist. In beiden Fällen kann das Füllverhalten der einzelnen Kammern vom Füllschlauch aus entsprechend eingestellt sein.

Nach einem Ausführungsbeispiel der Erfindung kann vorgesehen sein, dass der Füllschlauch an seinem vorderen, dem Gasgenerator abgewandten Ende mit der zugeordneten äußeren Wandung des Gassacks verbunden ist.

Es kann weiterhin vorgesehen sein, dass der Füllschlauch mit seinem vorderen, dem Gasgenerator abgewandten Ende nur teilweise in die in der Längsrichtung des Gassacks entfernteste Kammer des Gassacks hineinreicht, wobei die der letzten beziehungsweise obersten Kammer des Gassacks zugeordnete Ausströmöffnung des Füllschlauches auch durch ein offen ausgebildetes Ende des Füllschlauches gebildet sein kann.

Die Erfindung ist dabei nicht auf die Anordnung eines einzigen Füllschlauches beschränkt, viel mehr kann bei einem eine entsprechend große Breite aufweisenden Gassack vorgesehen sein, daß im Inneren des Gassacks zwei parallel zueinander ausgerichtete Füllschläuche angeordnet sind. Auch die Anordnung von mehr als zwei Füllschläuchen ist nicht ausgeschlossen.

Zusätzlich zu der Anordnung des Füllschlauches kann vorgesehen sein, daß in den die Kammer des Gassacks voneinander trennenden Trennwänden jeweils wenigstens eine Überströmöffnung angeordnet ist, wie derartige in den Trennwänden angeordnete Überströmöffnungen aus der gattungsbildenden DE 10 2008 060858 A1 bekannt sind. Bei der erfindungsgemäßen Ausgestaltung des Knieairbags dienen diese Überströmöffnungen insbesondere einem Druckausgleich zwischen den einzelnen Kammern des Gassackes, insbesondere bei einem Aufprall des Fahrzeuginsassen.

Schließlich kann in an sich bekannter Weise vorgesehen sein, dass in der äußeren Gassackwandung wenigstens eine Ventöffnung zum Ablassen von Gas ins Freie angeordnet ist.

In der Zeichnung ist ein Ausführungsbeispiel der Erfindung wiedergegeben, welches nachstehend beschrieben ist. Es zeigen:
- Fig. 1: den aufgeblasenen Gassack eines erfindungsgemäßen Knieairbags in einer Perspektivdarstellung
- Fig. 2: den Gassack gemäß Fig. 1 in einer schematisierten Seitenansicht,
- Fig. 3: den Gassack gemäß Fig. 1 in einer schematisierten Vorderansicht,
- Fig. 4: den im Inneren des Gassackes angeordneten Füllschlauch in einer Einzeldarstellung,
- Fig. 5: eine die Kammern des Gassackes trennende Trennwand in einer Einzeldarstellung

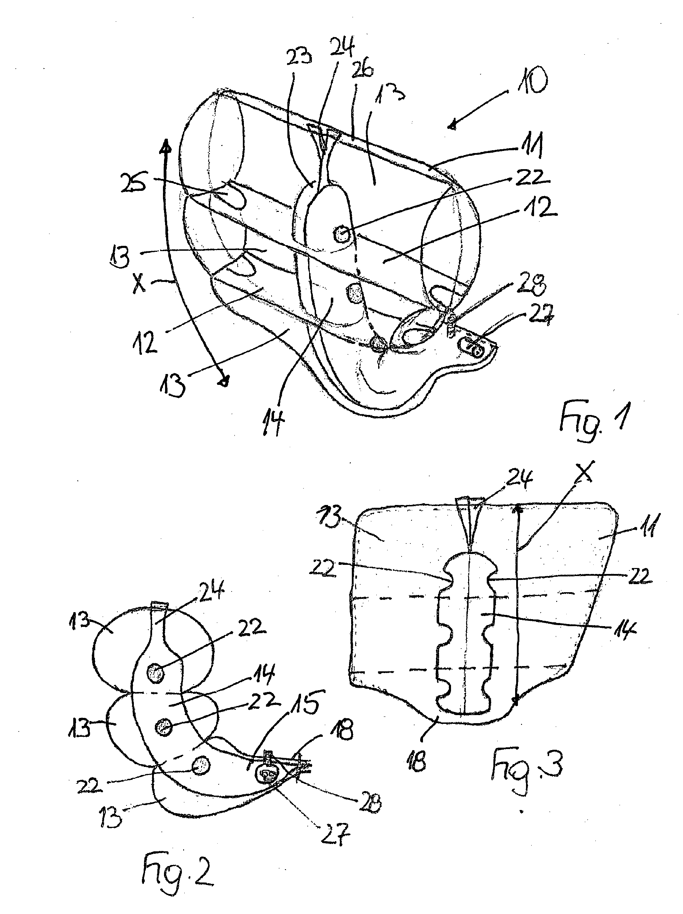

Der zunächst in den Figuren 1 bis 3 insgesamt dargestellte Knieairbag 10 weist einen Gassack 11 auf, der in seiner sich von einem an ein fahrzeugfestes Teil angebundenen hinteren Ende zu einem freien, einem Fahrzeuginsassen zugewandten vorderen Ende erstreckenden Längsrichtung X eine bananenförmig gekrümmte Gestalt aufweist. Der Gassack 11 ist in seinem Inneren durch zwei quer zu seiner Längsrichtung angeordnete Trennwände 12 in drei einzelne Kammern 13 unterteilt.

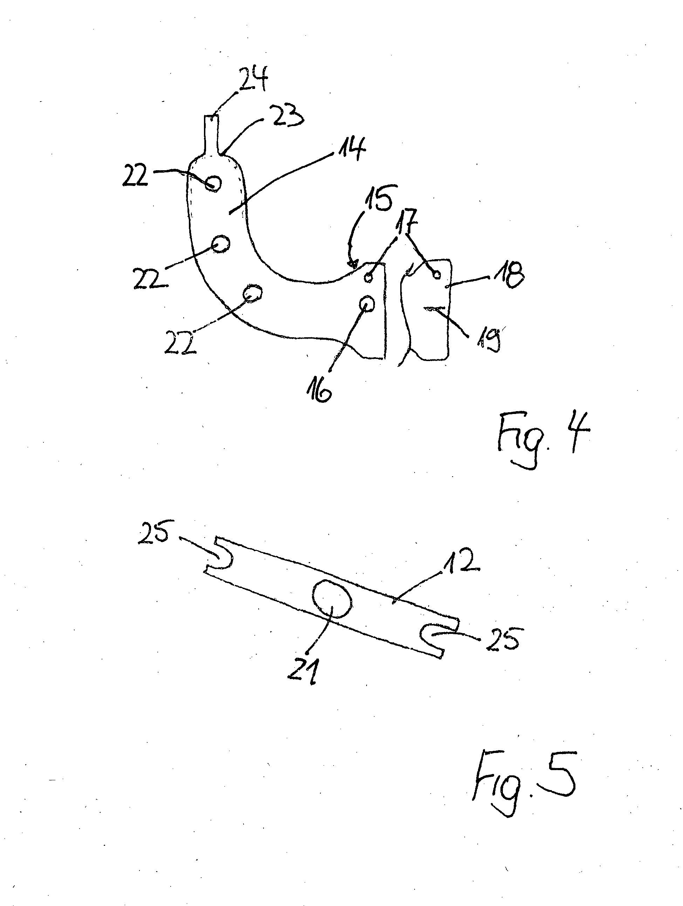

Im Inneren des Gassackes 11 ist ein zentraler, sich in der Längsrichtung X des Gassackes 11 erstreckender und dabei die Trennwände 12 des Gassackes 11 in darin angeordneten Durchtrittsöffnungen 21 durchstoßender Füllschlauch 14 angeordnet, der entsprechend der Darstellung in Figur 4 im aufgeblasenen Zustand eine bananenförmige Gestalt hat und aufgrund dieser bananenförmigen Gestalt auch dem Gassack 11 die bananenförmig gekrümmte Gestalt gemäß Figur 1 vermittelt.

Wie sich am Besten aus Fig. 4 ergibt, weist der Füllschlauch 14 in seinem unteren Bereich 15 eine Aufnahme für einen im Einzelnen nicht dargestellten Gasgenerator auf, wobei in dem Bereich 15 des Füllschlauches 14 eine Öffnung 16 für einen Gasgeneratoranschluss ausgebildet ist. Zusätzlich ist ein Loch 17 zum Hindurchführen eines Haltebolzens für den im Einzelnen nicht dargestellten Gasgenerator angedeutet. In Fig. 4 ist weiterhin ausschnittsweise ein entsprechender unterer Abschnitt 18 des Gassackes 11 zusätzlich dargestellt, der den unteren Bereich 15 des Füllschlauches 14 aufnimmt, wobei in diesem unteren Bereich 18 des Gassackes 11 ebenfalls eine Einführöffnung 19 für den Gasgenerator sowie ein Loch 17 zum Durchtritt des Befestigungsbolzens für den Gasgenerator angedeutet sind. In den Figuren 1 und 2 sind ein Gasgeneratoranschluß 27 und ein Steckbolzen 28 angedeutet.

Bei dem dargestellten Ausführungsbeispiel weist der Füllschlauch 14 in jedem seiner den einzelnen Kammern 13 zugeordneten Abschnitt einander gegenüberliegende Ausströmöffnungen 22 für das in den Füllschlauch 14 eingeleitete Gas auf, so daß das in den Füllschlauch 14 einströmende Gas über die Ausströmöffnungen 22 mehr oder weniger gleichzeitig in die einzelnen Kammern 13 des Gassackes 11 einströmen kann. Das bei dem dargestellten Ausführungsbeispiel geschlossen ausgebildete obere Ende 23 des Füllschlauches 14 ist mittels entsprechender Befestigungsbänder 24 mit der zugeordneten äußeren Wandung 26 des Gassackes 11 verbunden.

Wie sich aus den Fig. 1 und 5 entnehmen lässt, sind jeweils an den beiden äußeren Enden der Trennwände 12 Überströmöffnungen 25 ausgebildet, so daß sich bei aufgeblasenem Gassack 11 beispielsweise bei einem Aufprall des Fahrzeuginsassen ein Druckausgleich zwischen den Kammern 13 vollziehen kann.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Knieairbag für ein Kraftfahrzeug, bestehend aus einem an einen Gasgenerator angeschlossenen und sich in aufgeblasenem Zustand entlang einer Längsrichtung (X) von einem an ein fahrzeugfestes Teil anbindbaren hinteren Ende zu einem freien, einem Fahrzeuginsassen zuwendbaren Ende erstreckenden Gassack, wobei der aufgeblasene Gassack durch in seinem Inneren quer zur Längsrichtung (X) verlaufende Trennwände in mehrere Kammern unterteilt ist und in aufgeblasenem Zustand eine bananenförmig gekrümmte Gestalt einnimmt, deren dem Fahrzeuginsassen zuwendbare äußere Fläche mit einem größeren Radius gekrümmt ist als deren gegenüberliegende, dem Fahrzeugteil zuwendbare Fläche, **dadurch gekennzeichnet, dass** im Inneren des Gassacks (11) wenigstens ein an den Gasgenerator angeschlossener, sich in der Längsrichtung(X) des Gassackes (11) erstreckender und dabei die Trennwände (12) durchstoßender Füllschlauch (14) mit einer in aufgeblasenem Zustand bananenförmigen Gestalt angeordnet ist, in dessen Wandung im Bereich jeder einzelnen von ihm erfassten Kammer (13) des Gassackes (11) wenigstens eine Ausströmöffnung angeordnet ist.

2. Knieairbag nach Anspruch 1, **dadurch gekennzeichnet, dass** die den einzelnen Kammern (13) des Gassackes (11) zugeordneten Ausströmöffnungen (22) des Füllschlauches (14) jeweils unterschiedliche Querschnitte aufweisen.

3. Knieairbag nach Anspruch 1, **dadurch gekennzeichnet, dass** in den den einzelnen Kammern (13) des Gassackes (11) zugeordneten Abschnitten des Füllschlauches (14) jeweils eine unterschiedliche Anzahl von Ausströmöffnungen (22) angeordnet ist.

4. Knieairbag nach einem der Ansprüche 1 bis 3, **dadurch gekennzeichnet, dass** der Füllschlauch (14) an seinem vorderen, dem Gasgenerator abgewandten Ende mit der zugeordneten äußeren Wandung des Gassacks (11) verbunden ist.

5. Knieairbag nach einem der Ansprüche 1 bis 4, **dadurch gekennzeichnet, dass** der Füllschlauch (14) mit seinem vorderen, dem Gasgenerator abgewandten Ende nur teilweise in die in der Längsrichtung (X) des Gassacks entfernteste Kammer (13) des Gassacks (11) hineinreicht.

6. Knieairbag nach einem der Ansprüche 1 bis 5, **dadurch gekennzeichnet, dass** bei einem eine große Breite aufweisenden Gassack (11) im Inneren des Gassacks (11) zwei parallel zueinander angeordnete Füllschläuche (14) angeordnet sind.

7. Knieairbag nach einem der Ansprüche 1 bis 6, **dadurch gekennzeichnet, dass** in den die Kammern (13) des Gassacks voneinander trennenden Trennwänden (12) jeweils wenigstens eine Überströmöffnung (25) angeordnet ist.

8. Knieairbag nach einem der Ansprüche 1 bis 7, **dadurch gekennzeichnet, dass** in der äußeren Gassackwandung wenigstens eine Ventöffnung zum Ablassen von Gas ins Freie angeordnet ist.

## Claims

1. A knee airbag for a motor vehicle, comprised of an airbag connected to a gas generator and extending in an inflated state along a longitudinal direction (X) from a rear end, connectable to a part fixed with respect to the vehicle, to a free end faceable towards a vehicle occupant, wherein the inflated airbag is divided into a plurality of chambers by separating walls extending perpendicular to the longitudinal direction (X), and in an inflated state assumes a banana-shaped curved design, the outer surface of which, which is faceable towards the vehicle occupant, is curved with a greater radius than that of its opposing surface which is faceable towards the vehicle part, **characterised in that** in the interior of the airbag (11) at least one filling hose (14) connected to the gas generator and extending in the longitudinal direction (X) of the airbag (11) and here penetrating the separating walls (12) is disposed with a banana-shaped design in the inflated state, in the wall of which filling hose (14) at least one outlet opening is disposed in the region of each individual chamber (13) of the airbag (11) struck by the filling hose (14).

2. The knee airbag according to claim 1, **characterised in that** each of the outlet openings (22) of the filling hose (14), which outlet openings (22) are associated with the individual chambers (13) of the airbag (11), has different cross-sections.

3. The knee airbag according to claim 1, **characterised in that** a different number of outlet openings (22) is disposed in each of the sections of the filling hose (14) associated with the individual chambers (13) of the airbag (11).

4. The knee airbag according to one of claims 1 to 3, **characterised in that** the filling hose (14) is connected on its front end facing away from the gas generator to the associated outer wall of the airbag (11).

5. The knee airbag according to one of claims 1 to 4, **characterised in that** the filling hose (14) reaches with its front end facing away from the gas generator only partially into the chamber (13) of the airbag (11) farthest in the longitudinal direction (X) of the airbag.

6. The knee airbag according to one of claims 1 to 5, **characterised in that** in an airbag (11) having a very large width two filling hoses (14) disposed parallel to each other are disposed in the interior of the airbag (11).

7. The knee airbag according to one of claims 1 to 6, **characterised in that** at least one overflow opening (25) is disposed in each of the separating walls (12) separating the chambers (13) of the airbag from one another.

8. The knee airbag according to one of claims 1 to 7, **characterised in that** at least one vent opening for letting off gas into the environment is disposed in the outer airbag wall.

## Revendications

1. Airbag genoux pour un véhicule automobile, constitué d'un sac gonflable relié à un générateur de gaz et s'étendant dans l'état gonflé le long d'une direction longitudinale (X) d'une extrémité arrière pouvant être attachée à une partie fixée à demeure sur le véhicule à une extrémité libre pouvant être tournée vers un passager du véhicule, le sac gonflable gonflé étant divisé en plusieurs compartiments par des parois de séparation s'étendant transversalement à la direction longitudinale (X) à l'intérieur de celui-ci et adoptant dans l'état gonflé une forme courbée en forme de banane, dont la surface extérieure pouvant être tournée vers le passager du véhicule est courbée avec un rayon plus grand que sa surface opposée pouvant être tournée vers la partie du véhicule, **caractérisé en ce qu'**au moins un tuyau de remplissage (14), relié au générateur de gaz, s'étendant dans la direction longitudinale (X) du sac gonflable (11) et transperçant ainsi les parois de séparation (12), doté d'une forme de banane dans l'état gonflé, est disposé à l'intérieur du sac gonflable (11), au moins un orifice d'écoulement étant disposé dans la paroi dudit tuyau de remplissage dans la zone de chacun des compartiments (13) du sac gonflable (11) qu'il atteint.

2. Airbag genoux selon la revendication 1, **caractérisé en ce que** les orifices d'écoulement (22) du tuyau de remplissage (14) associés aux différents compartiments (13) du sac gonflable (11) présentent respectivement des sections transversales différentes.

3. Airbag genoux selon la revendication 1, **caractérisé en ce qu'**un nombre différent d'orifices d'écoulement (22) est disposé respectivement dans les segments du tuyau de remplissage (14) associés aux différents compartiments (13) du sac gonflable (11).

4. Airbag genoux selon l'une des revendications 1 à 3, **caractérisé en ce que** le tuyau de remplissage (14) est relié par son extrémité avant opposée au générateur de gaz à la paroi extérieure associée du sac gonflable (11).

5. Airbag genoux selon l'une des revendications 1 à 4, **caractérisé en ce que** le tuyau de remplissage (14) s'étend avec son extrémité avant opposée au générateur de gaz uniquement partiellement dans le compartiment (13) du sac gonflable (11) le plus éloigné dans la direction longitudinale (X) du sac gonflable.

6. Airbag genoux selon l'une des revendications 1 à 5, **caractérisé en ce que**, dans le cas d'un sac gonflable (11) présentant une grande largeur, deux tuyaux de remplissage (14) disposés parallèlement l'un à l'autre sont disposés à l'intérieur du sac gonflable (11).

7. Airbag genoux selon l'une des revendications 1 à 6, **caractérisé en ce qu'**au moins un orifice de déversement (25) est disposé dans chacune des parois de séparation (12) séparant les uns des autres les compartiments (13) du sac gonflable.

8. Airbag genoux selon l'une des revendications 1 à 7, **caractérisé en ce qu'**au moins un orifice d'évent est disposé dans la paroi extérieure du sac gonflable pour laisser du gaz s'échapper à l'air libre.
